# EUROPEAN PATENT APPLICATION

(11) **EP 1 548 063 A1**
(43) Date of publication of application: **29.06.2005**
(21) Application number: 03748698.2
(22) Date of filing: 03.10.2003
(51) Int. Cl.: C08L 65/00, C08L 45/00, C08J 5/18

(54) **THERMOPLASTIC SATURATED NORBORNENE BASED RESIN FILM, ANS METHOD FOR PRODUCING THERMOPLASTIC SATURATED NORBORNENE BASED RESIN FILM**

(30) Priority: 03.10.2002 JP 2002290614; 27.12.2002 JP 2002379933; 26.02.2003 JP 2003049844; 08.05.2003 JP 2003130654
(71) Applicant: SEKISUI CHEMICAL CO., LTD., Osaka-shi, Osaka 530-8565 (JP)
(72) Inventor: TOYOSHIMA, K., c/o Sekisui Chemical Co., Ltd, Mishima-gun, Osaka 618-8589 (JP); MORITA, T., c/o Sekisui Chemical Co., Ltd, Mishima-gun, Osaka 618-8589 (JP); HIRAIKE, H., c/o Sekisui Chemical Co., Ltd, Mishima-gun, Osaka 618-8589 (JP); TAGAMI, M., c/o Sekisui Chemical Co., Ltd, Inukami-gun, Shiga 522-0314 (JP); OGINO, K., c/o Sekisui Chemical Co., Ltd, Inukami-gun, Shiga 522-0314 (JP); NISHIMURA, K., c/o Sekisui Chemical Co., Ltd, Inukami-gun, Shiga 522-0314 (JP)
(74) Representative: Hart Davis, Jason
(86) International application number: PCT/JP2003/012698
(87) International publication number: WO 2004/035688

(57) **Abstract**

It is an object of the invention to provide a thermoplastic saturated norbornene resin film, an optical film, a protective film for a polarizer, a retardation film, a polarizing plate obtainable by this, which realizes the compatibility between excellent physical properties and optical characteristics, and a method of producing a thermoplastic saturated norbornene resin film.

The invention relates to a thermoplastic saturated norbornene resin film, which is obtainable by using a thermoplastic saturated norbornene resin composition containing a thermoplastic saturated norbornene resin in an amount of 100 parts by weight and a rubber polymer in an amount of 5 to 40 parts by weight, parallel transmittance being 87% or more.

## Description

### FIELD OF THE INVENTION

The present invention relates to a thermoplastic saturated norbornene resin film, an optical film, a protective film for a polarizer, a retardation film, a polarizing plate, which realizes the compatibility between excellent physical properties and optical characteristics, and a method of producing a thermoplastic saturated norbornene resin film.

### BACKGROUND ART

Thermoplastic saturated norbornene resins have excellent performances in heat resistance, optical characteristics, transparency, electric characteristics and the like and their applications as films used for parts for automobiles, electric and electronic parts, optical components and construction materials are considered. Among others, there are expected applications as a protective film for a polarizer or a retardation film, which is used in liquid crystal displays of desktop electronic calculators, electronic watches, word processors, instruments of automobiles and machineries, and the like.

The polarizing plate generally comprises a polarizer obtainable by allowing a polyvinyl alcohol resin oriented by drawing to adsorb iodine or dye with dichroism and protective films for a polarizer bonded to both sides of the polarizer. It is required for an optical film to be used as a protective film for a polarizer to be superior in optical characteristics such as optical transparency and to have a mechanical strength capable of preventing the shrinkage of a polarizer having large shrinkage and heat resistance capable of resisting high temperatures subjected in a manufacturing process.

Conventionally, as the protective film for a polarizer, optical films comprising triacetyl cellulose have been used. However, the optical film comprising triacetyl cellulose had problems that it had excellent optical characteristics but was insufficient in heat resistance and moisture resistance, and when it was used for a long time in an hot or humid atmosphere, a significant reduction in a degree of polarization, peeling between a polarizer and a protective film and deterioration of transparency due to hydrolysis of triacetyl cellulose had occurred and performance of the polarizing plate had been deteriorated.

And, in the polarizing plate, a retardation film is used for the purpose of compensating a strain of light in passing through a liquid crystal material. As such a retardation film, there has been used a substance comprising resin which is superior in transparency and heat resistance such as a polycarbonate resin or a polysulfone resin.

In Japanese Kokai Publication Hei-5-247324, there is disclosed an optical film comprising a thermoplastic saturated norbornene resin. The optical film comprising the thermoplastic saturated norbornene resin exhibits a feature that development of birefringence corresponding to a stress is small, excellent optical characteristics such as high transparency and in addition excellent heat resistance. Accordingly, if the optical film comprising a thermoplastic saturated norbornene resin is used, it can be expected to obtain a polarizing plate having excellent optical characteristics.

However, the optical film comprising a thermoplastic saturated norbornene resin had a problem that it was very brittle and production of a thin film was difficult. And, even when the production of the optical film by an extrusion process was tried, since a film broke in the case where a take off speed was high, there was also a problem in productivity.

In manufacturing of liquid crystal displays, there is conducted a step of bonding a polarizing plate to a liquid crystal cell, but it cannot be avoided that bubbles or contamination is involved in bonding and that there are defects in the polarizing plate itself. Therefore, there is conducted a step referred to as a rework, in which an inspection is carried out after the step of bonding a polarizing plate to a liquid crystal cell, and when defects are present, the polarizing plate is peeled to reuse the expensive liquid crystal cell. In order to enable such a reuse, it was necessary that the polarizing plate might be easily removed in peeling it, but in the case of a polarizing plate using a protective film for a polarizer or a retardation film, comprising a brittle thermoplastic saturated norbornene resin, there was a problem that the polarizing plate might break in peeling it and reworkability was poor.

Correspondingly, in Japanese Kokai Publication Hei-3-106963, there is disclosed a resin composition containing a hydrogenated ring-opening norbornene polymer and rubber. It is described that this is a resin composition, which can provide a molded article inhibiting crack or sink during molding when using it for insert molding of metal parts by adding rubber to a hydrogenated ring-opening norbornene polymer. It is considered that physical properties of this resin composition such as brittleness of a norbornene resin are improved. However, optical characteristics such as parallel transmittance were significantly deteriorated due to addition of rubber and therefore it could not be used as an optical film.

In Japanese Kokai Publication Hei-5-247324, there is also described a thermoplastic saturated norbornene resin composition, which comprises a thermoplastic saturated norbornene resin and a compounding agent being not compatible with it and in which the compounding agent is dispersed forming micro domains, and optical materials obtainable by this. And, it is disclosed that when a rubber polymer is used as a compounding agent, adhesion to various coating materials or films can be improved. However, an amount of rubber polymer to be added was specified to be about 0.001 to 0.8 parts by weight per 100 parts by weight of the thermoplastic saturated norbornene resin to attain sufficient optical performance, and addition of the compounding agent of this extent could not realize a sufficient improvement in physical properties.

And, in Japanese Patent Publication No. 2940014, there is disclosed a thermoplastic resin composition comprising a thermoplastic saturated norbornene resin and a rubber polymer. Also, there is described a molded article obtainable by injecting the thermoplastic resin composition. However, in Japanese Patent Publication No. 2940014, impact resistance and total transmittance of the obtained molded article were described but production of optical films was not described at all, and parallel transmittance and haze, which were essential to performance of an optical film, were not described at all, either.

Further, in Japanese Kokai Publication Hei-5-148413, there is disclosed a film obtainable by dissolving or dispersing a thermoplastic saturated norbornene resin and a rubber component in a solvent and molding them by a casting method. It is described that elongation is improved by blending a rubber component into a thermoplastic saturated norbornene resin. However, the obtained film was poor at optical characteristics such as parallel transmittance and could not be used as an optical film.

### SUMMARY OF THE INVENTION

In view of the state of the art, it is an object of the present invention to provide a thermoplastic saturated norbornene resin film, an optical film, a protective film for a polarizer, a retardation film, a polarizing plate and a method of producing a thermoplastic saturated norbornene resin film, which realize the compatibility between excellent physical properties and excellent optical characteristics.

The first aspect in the present invention pertains to a thermoplastic saturated norbornene resin film which is obtainable by using a thermoplastic saturated norbornene resin composition containing a thermoplastic saturated norbornene resin in an amount of 100 parts by weight and a rubber polymer in an amount of 5 to 40 parts by weight, parallel transmittance being 87% or more.

Preferably, the difference of refractive indexes between the thermoplastic saturated norbornene resin and the rubber polymer is 0.2 or less.

Preferably, the thermoplastic saturated norbornene resin film of the first aspect in the present invention has a tensile elastic modulus of 900 MPa or higher and a tensile elongation at break of 4 to 40%, and has residual retardation of 3 nm or lower and displacement of the optical axis of ±10° or smaller with respect to a machine direction, and more preferably, it has the residual retardation of 1 nm or lower. And, it is preferred that the difference between the maximum thickness and the minimum thickness in measuring a film thickness by a method according to JIS K 7130 is 5 µm or smaller and it may be rewinded without breaking with tension of 500 N/650 mm.

The rubber polymer is preferably a styrenic elastomer and the styrenic elastomer is preferably a styrene-ethylene-butylene copolymer, the content of a styrene component being 25 to 50% by weight and the content of an ethylene component being 25 to 50% by weight.

Preferably, the thermoplastic saturated norbornene resin composition further contains a thermoplastic resin having a number average molecular weight of 300 to 10,000.

Preferably, the thermoplastic saturated norbornene resin film of the first aspect in the present invention has a photoelastic coefficient of 2.0×10⁻¹¹ Pa⁻¹ or smaller.

An optical film, a protective film for a polarizer and a retardation film comprising the thermoplastic saturated norbornene resin film of the first aspect in the present invention also constitute the present invention.

The second aspect in the present invention pertains to a polarizing plate, which comprises a protective film for a polarizer, comprising a norbornene resin composition, and a polarizer parallel transmittance being 40% or more and not breaking in peeling off the polarizing plate with a tensile speed of 300 mm/min and tension of from 2.5 to 3 N/25 mm under the conditions of a 180 degree peel test according to JIS Z 1528.

In the polarizing plate of the second aspect in the present invention, it is preferred that the rate of change in dimensions measured before and after heating at 90°C for 24 hours is 2% or less.

A polarizing plate, which is obtainable by laminating the retardation film of the present invention directly on at least one side of the polarizer, also constitutes the present invention.

A method of producing the thermoplastic saturated norbornene resin film of the first aspect in the present invention by a melt extrusion process, wherein a melting temperature of the thermoplastic saturated norbornene resin composition during melting the thermoplastic saturated norbornene resin composition and sending the thermoplastic saturated norbornene resin composition to a die is a glass transition temperature of the thermoplastic saturated norbornene resin plus 135°C or lower and an average residence time from melting the thermoplastic saturated norbornene resin composition to sending it to a die is 40 minutes or less, also constitutes the present invention.

In the method of producing a thermoplastic saturated norbornene resin film of the present invention, temperature, immediately prior to contact with the chill roll, of the thermoplastic saturated norbornene resin composition extruded from a die is preferably a glass transition temperature of the thermoplastic saturated norbornene resin plus 50°C or more, and it is more preferably a glass transition temperature of the thermoplastic saturated norbornene resin plus 80°C or more.

### BRIEF DESCRIPTION OF THE DRAWINGS

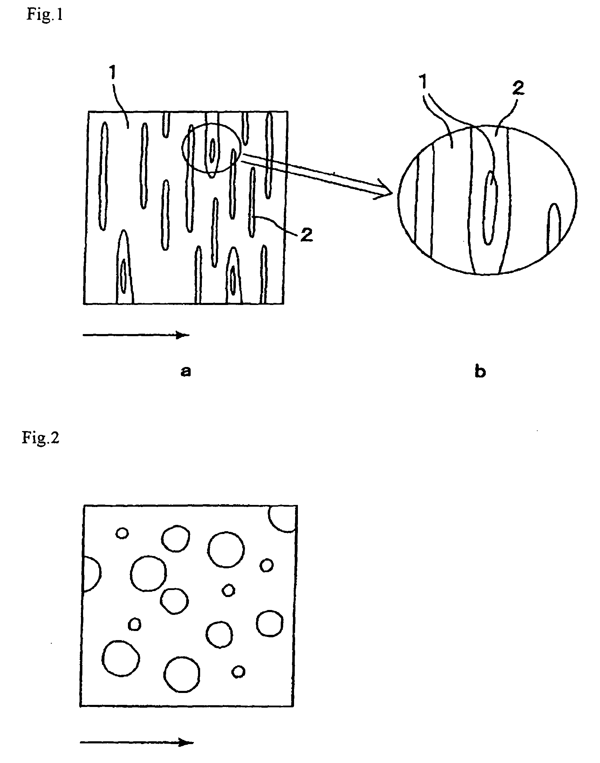

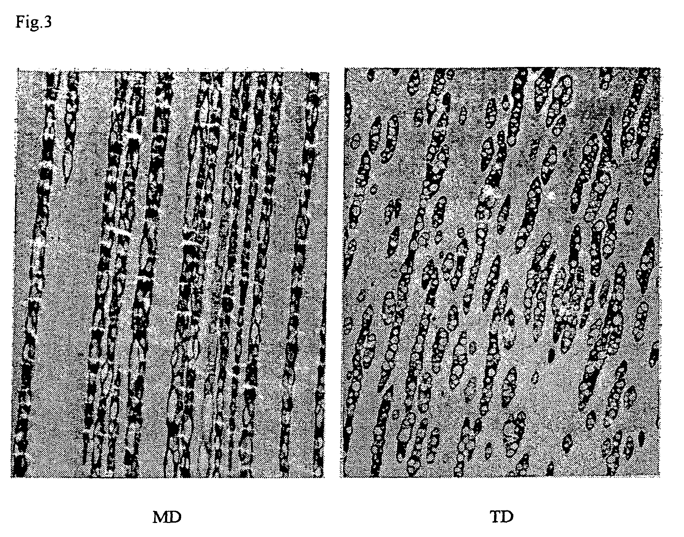

Fig. 1 is a schematic view showing an example of a transmission electron micrograph of a cross section of a thermoplastic saturated norbornene resin film of the first aspect in the present invention. Fig. 2 is a schematic view showing an example of a transmission electron micrograph of a cross section of a conventional thermoplastic saturated norbornene resin film. Fig. 3 is a transmission electron micrograph of a cross section of a thermoplastic saturated norbornene resin film prepared in Example 1.

In these drawings, a reference numeral 1 represents a thermoplastic saturated norbornene resin and a reference numeral 2 represents a rubber polymer.

### DETAILED DESCRIPTION OF THE INVENTION

Hereinafter, the present invention will be described in detail.

A thermoplastic saturated norbornene resin film (hereinafter, also referred to as a TPSNB resin film) of the first aspect in the present invention is a film obtainable by using a thermoplastic saturated norbornene resin composition (hereinafter, also referred to as a TPSNB resin composition) containing a thermoplastic saturated norbornene resin (hereinafter, also referred to as TPSNB resin) and a rubber polymer.

In the present description, a TPSNB resin refers to a polymer of a norbornene monomer or a copolymer of a norbornene monomer and a monomer which can copolymerize with it, not having an unsaturated bond in a molecule, or hydrogenated to an unsaturated bond in the case of having an unsaturated bond in a molecule.

The norbornene polymer is not particularly limited but for example, a substance obtainable by polymerizing at least one species of norbornene monomers expressed by the following general formula (1) or a substance obtainable by copolymerizing at least one species of norbornene monomers expressed by the following general formula (1) and a copolymerizable monomer which may copolymerize with this are suitably used.

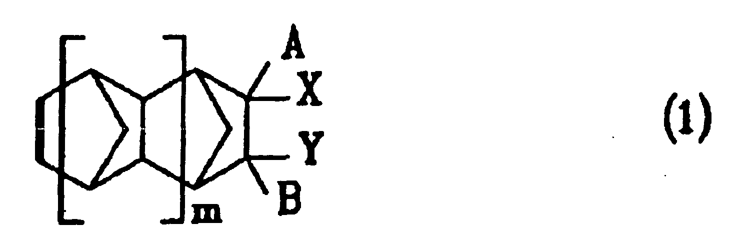

In the formula (1), wherein A and B are independent of each other and represent a hydrogen atom or a hydrocarbon group having 1 to 10 carbon atoms, X and Y are independent of each other and represent a hydrogen atom, a halogen atom or an organic group, and m is an integers of 0 to 1.

The norbornene monomer expressed by general formula (1) is not particularly limited but it is suitably, for example, a substance not having a functional group such as bicyclo[2.2.1]-2-heptene, tricyclo[5.2.1.0^{2,6}]-8-decene, tricyclo[5.2.1.0^{2,6}]-3-decene, tricyclo[6.2.1.0^{1,9}]-9-undecene, tricyclo[6.2.1.0^{1,9}]-4-undecene and tetracyclo[4.4.0.1^{2,5}.1^{7,10}]-3-dodecene; and a substance having a functional group such as 8-methoxycarbonyltetracyclo[4.4.0.1^{2,5}.1^{7,10}]-3-dodecene, 8-methyl-8-methoxycarbonyltetracyclo[4.4.0.1^{2,5}.1^{7,10}]-3-dodecene and 5-methoxycarbonyl-bicyclo[2.2.1]-2-heptene are suitable. Among others, tetracyclododecene derivatives, in which m is 1 in the general formula (1), is suitable in that a polymer having a high glass transition temperature can be obtained. These norbornene monomers may be used alone or in combination of two or more species.

A copolymerizable monomer which can copolymerize with the norbornene monomer expressed by the general formula (1) is not particularly limited and includes, for example, norbornene monomers not contained in the general formula (1) and cyclic olefinic monomers not having a norbornene skeleton. As a norbornene monomers not contained in the general formula (1), there are given polycycloalkene such as pentacyclo[6.5.1.1^{3,6}.0^{2,7}.0^{9,13}]-4-pentadecene, pentacyclo[6.6.1.1^{3,6}.0^{2,7}.0^{9,14}]-4-hexadecene, pentacyclo[6.5.1.1^{3,6}.0^{2,7}.0^{9,13}]-11-pentadecene, dicyclopentadiene and pentacyclo[6.5.1.1^{3,6}.0^{2,7}.0^{9,13}]-pentadeca-4,11-diene.

The cyclic olefinic monomers not having a norbornene skeleton is not particularly limited and includes for example, cycloolefines such as cyclopentene, cyclooctene, 1,5-cyclooctadiene and 1,5,9-cyclododecatriene.

A method of polymerizing a norbornene monomer expressed by the general formula (1) or a method of copolymerizing a norbornene monomer expressed by the general formula (1) and a copolymerizable monomer which may copolymerize with this is not particularly limited and for example, a conventional method publicly known, such as ring-opening metathesis polymerization, addition polymerization may be employed.

A method of hydrogenating the norbornene polymer or the norbornene copolymer is not particularly limited and includes, for example, a method of using a publicly known catalyst such as Wilkinson complex, cobalt acetate/triethylaluminum, nickel acetylacetonato/triisobutylaluminum, palladium-carbon, ruthenium complex, ruthenium-carbon and nickel-diatomite. When metathesis polymerizable complexes, such as ruthenium-alkylidene complex, ruthenium-vinylidene complex, and ruthenium-Fischer carbene complex, is used in polymerizing, hydrogenation can be performed by pressurizing with hydrogen without adding a catalyst for hydrogenation and therefore a polymerization step and a hydrogenation step can be performed sequentially.

The hydrogenation is generally performed at 0 to 250°C under a hydrogen pressure of 1 to 200 atmospheres in a homogeneous system or a heterogeneous system depending on kinds of catalyst.

The TPSNB resin means a substance to which hydrogen is added in such a way that a hydrogen addition ratio is at least 50% or higher in the case where the norbornene polymer or the norbornene copolymer has the unsaturated bond in a molecule but a hydrogen addition ratio is preferably 90% or higher and more preferably 99% or higher. When the hydrogen addition ratio is lower than 50%, light resistance and heat resistance of the TPSNB resin film of the first aspect in the present invention to be obtained are poor.

A number average molecular weight, on the polystyrene equivalent basis, of the TPSNB resin is preferably 10,000 to 1,000,000. When it is less than 10,000, the mechanical strength of the resulting TPSNB resin film of the first aspect in the present invention may be insufficient, and when it is more than 1,000,000, the ability to be melt-molded may be significantly reduced. It is more preferably 15,000 to 700,000.

In addition, since a desired effect is easy to attain even when an amount of a rubber polymer to be blended is decreased, it is preferred that a TPSNB resin having a higher molecular weight is used within the limits of satisfying another requirements such as the ability to be melt-molded.

A glass transition temperature of the TPSNB resin is preferably 70 to 180°C. When it is lower than 70°C, heat resistance of a TPSNB resin film of the first aspect in the present invention to be obtained may be poor, and when it is more than 180°C, molding may become difficult.

The TPSNB resin composition contains a rubber polymer.

In the present description, the rubber polymer is a polymer comprising a hard segment and a soft segment and refers to a substance in which a glass transition temperature of the soft segment is 25°C or lower.

The rubber polymer is not particularly limited and includes, for example, styrenic elastomers such as styrene-butadiene block copolymer, hydrogenated styrene-butadiene block copolymer, styrene-isoprene block copolymer, hydrogenated styrene-isoprene block copolymer, styrene-isobutylene block copolymer, and thermoplastic elastomers such as low crystalline polybutadiene resin, ethylene-propylene elastomer, styrene-graft ethylene-propylene elastomer, thermoplastic polyester elastomer, ethylenic ionomer resin. These rubber polymers may be modified by a specific functional group such as an epoxy group, a carboxyl group, a hydroxyl group, an amino group, an acid anhydride group, an oxazoline group. Among others, styrenic elastomers are suitable.

The styrenic elastomer is not particularly limited as long as it can improve the physical properties such as a tensile elastic modulus and a tensile elongation at break without impairing the optical characteristics of the TPSNB resin film of the first aspect in the present invention to be obtained, and includes, for example, a copolymer comprising a styrene segment and a segment having a glass transition temperature of 25°C or lower. Among others, a styrene-ethylene-butylene copolymer(SEES) and styrene-ethylene-propylene copolymer are preferred. Particularly, a styrene-ethylene-butylene copolymer, in which the content of a styrene component is 25 to 50% by weight and the content of an ethylene component is 25 to 50% by weight, is suitable since an optical film, which realizes the compatibility between extremely excellent optical characteristics and physical properties, can be obtained. It is considered that the reason for this is that since it has the refractive index being very close to that of the TPSNB resin and can efficiently impart rubber properties to the resin and a decrease in the elastic modulus is small, it does not impair the characteristics of the TPSNB resin.

When the styrenic elastomer is used as the rubber polymer, a number average molecular weight of the styrenic elastomer is preferably 50,000 to 1,000,000. When it is less than 50,000, the dispersibility into the norbornene resin becomes insufficient and it may be impossible to attain an effect of improvement in physical properties by addition of the rubber polymer, and when it is more than 1,000,000, since the moldability is poor due to too high melt viscosity in being blended into the norbornene resin, it may be impossible to obtain a homogeneous film. The number average molecular weight is more preferably 80,000 to 500,000 and furthermore preferably 100,000 to 400,000.

The difference of refractive indexes between the TPSNB resin and the rubber polymer is preferably 0.2 or less. When the difference is more than 0.2, the transparency and the residual retardation of the resulting TPSNB resin film of the first aspect in the present invention may be deteriorated or the optical strain may tend to develop. The difference is more preferably 0.1 or less, furthermore preferably 0.05 or less and particularly preferably 0.03 or less.

And, when the TPSNB resin composition is prepared by melting and mixing, a ratio (η rubber/ η norbornene) between the viscosity (η norbornene) of the TPSNB resin and the viscosity (η rubber) of the rubber polymer at a molding temperature is preferably close to 1. When this viscosity ratio is close to 1, the rubber polymer can be finely dispersed in the TPSNB resin. This ratio is preferably 0.2 to 3.0 and more preferably 0.4 to 2.0. When a haze value of the TPSNB resin film to be obtained is 0.5% or lower, it is preferred that particularly η rubber/ η norbornene is 0.5 to 1.8. And, the term viscosity refers to viscosity measured at a shear rate of 24.3 at an actual molding temperature.

The content of the rubber polymer is preferably 5 to 40 parts by weight per 100 parts by weight of the TPSNB resin composition in the TPSNB resin. When it is less than 5 parts by weight, a sufficient effect of improving the physical properties of the TPSNB resin film of the first aspect in the present invention cannot be attained, and when it is more than 40 parts by weight, the optical characteristics of the resulting TPSNB resin film of the present invention is poor. It is preferably 10 to 30 parts by weight.

Preferably, the TPSNB resin composition further contains a thermoplastic resin. By containing the thermoplastic resin, the compatibility between the TPSNB resin and the rubber polymer is enhanced and optical characteristics of the resulting TPSNB resin film of the first aspect in the present invention may be enhanced.

The thermoplastic resin is not particularly limited but olefinic resins are suitable because of high compatibility with the TPSNB resin.

A number average molecular weight of the thermoplastic resin is preferably 300 to 10,000. When it is less than 300, problems such as bleeding out may develop, and when it is more than 10,000, it may be impossible to attain an effect of improving the compatibility. It is more preferably 500 to 5,000 and furthermore preferably 600 to 2,000.

The difference of refractive indexes between the thermoplastic resin and the TPSNB resin is preferably 0.2 or less. When the difference is more than 0.2, the transparency of the resulting TPSNB resin film of the first aspect in the present invention may be poor. The difference is more preferably 0.1 or less.

And, in the case where the thermoplastic resin is blended into the TPSNB resin composition by a method of melt kneading, it is preferred that a temperature, at which 2% by weight is degraded under an atmosphere of air in thermogravimetry, is 230°C or higher. The temperature is more preferably 250°C or higher and furthermore preferably 270°C or higher.

As a commercially available one of thermoplastic resins having such the properties, there are given, for example, "Escorez" produced by Tonex Corporation, "Clearon" produced by YASUHARA CHEMICAL Co., Ltd., and "ARKON" produced by Arakawa Chemical Industries, Ltd.

The TPSNB resin composition may contain, within the limits of not inhibiting the purpose of the present invention as required, anti-oxidants such as 2,6-di-t-butyl-4-methylphenol, 2-(1-methylcyclohexyl)-4,6-dimethylphenol, 2,2-methylene-bis(4-ethyl-6-t-butylphenol), tris(di-nonylphenyl)phosphite; ultraviolet absorbers such as p-t-butylphenylsalicylate, 2,2'-dihydroxy-4-methoxybenzophenone, 2-(2'-dihydroxy-4'-m-octoxyphenyl)benzotriazole; lubricants such as paraffin wax, hydrogenated oil; and antistatic agents such as stearoaditopropyldimethyl-β-hydroxydiethylammonium nitrate.

The TPSNB resin film of the first aspect in the present invention has the parallel transmittance of 87% or more. When the transmittance is less than 87%, it becomes difficult to use it in applications such as a protective film for a polarizer. The transmittance is preferably 89% or more.

Preferably, the TPSNB resin film of the first aspect in the present invention has a haze value of 5% or less. When the haze value is more than 5%, in the case of using it in applications of a protective film for a polarizer and the like, light leakage may occur. The haze value is more preferably 3% or less, furthermore preferably 1% or less and particularly preferably 0.5% or less.

Preferably, the TPSNB resin film of the first aspect in the present invention has residual retardation of 3 nm or lower and displacement of the optical axis of ±10° or smaller with respect to a machine direction (MD). When the residual retardation is higher than 3 nm or the displacement of the optical axis is larger than ±10° with respect to a machine direction, in the case where the TPSNB resin film of the first aspect in the present invention is used as a protective film for a polarizer, light leakage may occur. The lower residual retardation and displacement of the optical axis is more preferred, and when the residual retardation is 1 nm or lower, since the magnitude of the displacement of the optical axis can be neglected and a step of inspecting the displacement of the optical axis becomes unnecessary, a production process of producing the protective film for a polarizer and the like can be more preferably simplified to a large extent.

Incidentally, the optical axis refers to a direction in which the refractive index of an incident light becomes largest, an axis generally referred to as a slow axis, and the displacement of the optical axis refers to an angular displacement with respect to the machine direction of the optical axis. And, the machine direction is a direction of flow of extrusion in fabricating for example a film by extrusion.

In the TPSNB resin film of the first aspect in the present invention, it is preferred that a tensile elastic modulus, which is measured according to JIS K 7113, is 900 MPa or higher. When the tensile elastic modulus is lower than 900 MPa, it may be impossible to inhibit shrinkage of a polarizer in the case where the TPSNB resin film of the first aspect in the present invention is used as a protective film for a polarizer. It is more preferably 1,000 MPa or higher. In addition, the higher tensile elastic modulus is more preferred and there is no particular upper limit.

In the TPSNB resin film of the first aspect in the present invention, it is preferred that a tensile elongation at break, which is measured according to JIS K 7113, is 4 to 40%. When the tensile elongation at break is lower than 4%, it is apt to break and therefore, in the case where the TPSNB resin film of the first aspect in the present invention is used as a protective film for a polarizer, the ability of the polarizing plate to be reworked may be poor. When it is higher than 40%, conducting a durability test, particularly a heat resistance aging test, changes in the dimension of the polarizing plate become large and changes in the optical characteristics or peeling off from a liquid crystal cell may be apt to occur. It is more preferably 6 to 35% and furthermore preferably 8% or higher.

Preferably, the TPSNB resin film of the first aspect in the present invention can be rewinded without breaking with a tension of 500 N/650 mm at room temperature. Thereby, the mass production becomes possible and the cost can be significantly reduced.

Preferably, the TPSNB resin film of the first aspect in the present invention has a photoelastic coefficient of 2.0×10⁻¹¹ Pa⁻¹ or smaller. When the TPSNB resin film of the first aspect in the present invention is used as a protective film for a polarizer, various external forces, such as a shrinkage stress of a polarizer, a stress based on strain in bonding it and a stress based on strain in incorporating it into a display, were exerted. Particularly, the shrinkage stress of a polarizer is large in hot and humid surroundings. The photoelastic coefficient is derived from the following equation;

Photoelastic coefficient (c) = birefringence (Δn)/stress (σ), and is a value representing a change in birefringence by external forces.

That is, the smaller photoelastic coefficient, the smaller the amount of change in birefringence by external forces. When the photoelastic coefficient is larger than 2.0×10⁻¹¹ Pa⁻¹, since the optical characteristics are significantly changed due to deformation by the external forces, the application to an optical film becomes difficult. It is more preferably 1.0×10⁻¹¹ Pa⁻¹ or smaller.

A thickness of the TPSNB resin film of the first aspect in the present invention is not particularly limited but it is preferably one satisfying the optical characteristics and the physical properties described when an average film thickness is 100 µm or smaller. In an optical film comprising a conventional TPSNB resin, when the average film thickness was 100 µm or smaller, it became very brittle and its production was difficult, and in addition when using it as a protective film for a polarizer, the resulting polarizing plate became a substance which was poor in reworkability. It satisfies the optical characteristics and the physical properties described more preferably when the average film thickness is 70 µm or smaller and furthermore preferably when the average film thickness is 50 µm or smaller. When it has the average film thickness of 50 µm or smaller and satisfies the optical characteristics and the physical properties described, the cost can be significantly reduced and it is extremely valuable. A lower limit of the average film thickness is not particularly limited but, considering the use as an optical film or a protective film for a polarizer, it is preferred that it satisfies the optical characteristics and the physical properties described preferably when the average film thickness is 25 µm or larger and more preferably when the average film thickness is 20 µm or larger.

And, in the TPSNB resin film of the first aspect in the present invention, it is preferred that the difference between the maximum thickness and the minimum thickness in measuring a thickness by a method according to JIS K 7130 is 5 µm or smaller. However, in measuring, end portions, namely, the respective 10% portions of the total length on both sides of a film extruded from a die, are not measured.

The present inventors have found as a result of an intense study that when there are variations in film thicknesses, particularly variation between the film thicknesses of the direction of flow and the direction perpendicular (TD) to flow in extruding the film, tensile elongations at break also vary widely. When the difference in film thicknesses is more than 5 µm, it may become a substance which is industrially poor in reworkability even though an average tensile elongation at break can satisfy the value.

Though, conventionally, there was not such a TPSNB resin film which realized the compatibility between optical characteristics and physical properties, the present inventors have found as a result of an intense study that it is possible to realize the compatibility between optical characteristics and physical properties by controlling the conditions of the TPSNB resin and the rubber polymer in the TPSNB resin film, leading to the completion of the present invention.

That is, when the TPSNB resin film of the first aspect in the present invention was dyed with ruthenium tetraoxide and then it was sliced in a thickness of about 0.05 µm and the cross section was observed using a transmission electron microscope, if a sectional structure becomes a state in which the rubber polymer is oriented in a certain direction in string or strip form and arrayed in a matrix of the TPSNB resin, the TPSNB resin film can realized the compatibility between the optical characteristics and physical properties. A schematic view showing an example of a transmission electron microscope image of the TPSNB resin film of the first aspect in the present invention being in such a state is shown in Fig. 1.

In Fig. 1, a rubber polymer 2 is oriented in a certain direction in string or strip form and arrayed in a matrix comprising TPSNB resin 1. The size of the rubber polymer in string or strip form is not particularly limited but a size of about 10 nm in width, about several tens to several hundreds nm in thickness and about 0.4 to 5 µm in length is preferred.

Further, an arrow in Fig. 1 indicates the thickness direction of the TPSNB resin film, and optical characteristics such as parallel transmittance in this direction are significant.

When the TPSNB resin film of the first aspect in the present invention takes on such a specific structure, it can realize the compatibility between excellent optical characteristics and excellent physical properties. The reason for this is considered to be that since the rubber polymers are observed to be dispersed in the form of rod or strip of about several tens to several hundreds nm, i.e., below a wavelength of visible light, in thickness in the TPSNB resin in viewing the TPSNB resin film of the present invention in the thickness direction, a transparent film can be obtained even when a large amount of the rubber polymer is blended to a degree that physical properties are adequately improved.

Further, in the TPSNB resin film of the first aspect in the present invention, it is more preferred that when the rubber polymer oriented in a certain direction in string or strip form and arrayed in a matrix comprising the TPSNB resin is observed in detail, the TPSNB resin film takes on a structure in which a layer of the TPSNB resin is taken in within at least a part of the rubber polymer in string or strip form. An example of such a structure is shown in Fig. lb.

In Fig. 1b, the TPSNB resin 1 is recognized further within the rubber polymer 2 in string or strip form in a matrix comprising the TPSNB resin 1. Such a structure is generally referred to as a salami structure. When the TPSNB resin film of the first aspect in the present invention has a salami structure, physical properties and optical performance such as reduction of residual retardation are further enhanced.

The reason for this is considered to be that when a force is applied by pulling the TPSNB resin film of the first aspect in the present invention, first, a stress is concentrated on an interface between the TPSNB resin and the rubber polymer, which take on the salami structure, and a force to break the film and a strain during molding, which is a cause of the residual retardation, are mitigated.

On the other hand, when a conventional TPSNB resin film described in Japanese Kokai Publication Hei-5-148413 is observed with a transmission electron microscope, a structure, in which rubber polymer flocculated at random floats in a matrix comprising TPSNB resin, is observed. A schematic view showing an example being in such a state is shown in Fig. 2.

In Fig. 2, various sized flocculates of a rubber polymer 2 are located at random in a matrix comprising TPSNB resin 1.

In the TPSNB resin film in such a state, since light is scattered within the film, it is considered that adequate optical characteristics cannot be attained when a large amount of the rubber polymer is blended.

In order to control the conditions of the TPSNB resin and the rubber polymer in the TPSNB resin film like this to obtain the TPSNB resin film of the first aspect in the present invention having excellent optical characteristics and physical properties, it is important that after mixing adequately the TPSNB resin and the rubber polymer, and various additives as required to prepare a TPSNB resin composition, melt extrusion is performed under special temperature control and further special temperature control is also performed on temperature conditions of the extruded film.

That is, in the case of producing the TPSNB resin film by a melt extrusion process, it is possible to realize the state of the TPSNB resin and the rubber polymer shown in Fig. 1 and to produce the TPSNB resin film of the first aspect in the present invention realizing the compatibility between optical characteristics and physical properties by setting a melting temperature of the TPSNB resin composition during melting the TPSNB resin composition and sending it to a die at a temperature of a glass transition temperature of the TPSNB resin plus 135°C or lower, and by setting an average residence time from melting it to sending it to a die at 40 minutes or less.

The TPSNB resin composition containing the rubber polymer is also disclosed in Japanese Patent Publication No. 2940014, for example. However, there has not been reported at all an example in which an optical film is prepared considering a measure, which is essential to performance as an optical film, to reduce defects such as fish eye on a film using the TPSNB resin composition containing the rubber polymer. In order to reduce the fish eye on a film, it is essential to be filtered with a resin filter and the like in an extruding step, and particularly in order to satisfy the performance required for the optical film, high accuracy of filtering, in which a resin filter with filtering accuracy of 10 µm or smaller is used, is required. When the resin filter with filtering accuracy of 10 µm or smaller is used, there is no other choice but to increase a size of the resin filter due to high pressure loss, and therefore an average residence time of resin tends to increase. And, it has been common to mold it at elevated temperature to reduce pressure loss in a filter by decreasing the viscosity of resin so as not to cause deterioration of film performance due to deterioration of a resin, considering an increase in pressure loss by plugging due to continuous operation. However, the present inventors have found that when the TPSNB resin composition containing the rubber polymer is formed in film form by such a conventional method, cohesion of the contained rubber polymer occurs and an optical film having the high parallel transmittance and the small haze cannot be obtained.

If a melting temperature of the TPSNB resin composition is higher than a temperature of a glass transition temperature of the TPSNB resin plus 135°C or an average residence time is larger than 40 minutes, the state of the TPSNB resin and the rubber polymer shown in Fig. 1 cannot be realized due to the occurrence of cohesion of the rubber polymer, and the parallel transmittance and the haze of the TPSNB resin film to be obtained will be deteriorated. A preferable melting temperature is a glass transition temperature of the TPSNB resin plus 130°C or lower. A preferable average residence time is 35 minutes or smaller and a more preferable average residence time is 30 minutes or smaller. Such a method producing the TPSNB resin film also constitutes the present invention.

And, the TPSNB resin composition containing the rubber polymer tends to decrease in melt viscosity compared to a simple TPSNB resin. Accordingly, when the TPSNB resin film is produced using the method of producing the TPSNB resin film of the present invention, molding at low temperature becomes possible, gelation of the TPSNB resin can be inhibited and a long-duration continuous manufacturing becomes possible. This can be said to be also an effect of using the rubber polymer. Further, the present inventors have found on the gelation of the TPSNB resin that the gelation of the TPSNB resin can be inhibited and fish eye of the obtained film can be reduced particularly when using, as a temperature for melting, a temperature at which the time that elapsed before the glass transition temperature increases by 1°C is 40 hours or more in keeping the TPSNB resin at a constant temperature in an atmosphere of nitrogen and measuring its glass transition temperature with a differential scanning calorimeter (DSC) every one hour. By molding the resin in such a temperature condition, a long-duration continuous manufacturing becomes possible.

A method of melt extruding it is not particularly limited and a conventional method publicly known can be used. For example, there is given a method in which after it is kneaded with a uniaxial or biaxial screw, it is melt extruded in film form with a T die, taken off by a chill roll and solidified by cooling.

A method of preparing the TPSNB resin composition is not particularly limited and includes, for example, a method of melt kneading it at a temperature which is higher by 50 to 150°C than a glass transition temperature of the TPSNB resin using, for example, a uniaxial kneader, a mixer, a biaxial kneader, and the like; a method of kneading under a supercritical condition; and a method of dissolving it in an appropriate solvent and then removing the solvent by a coagulation method, a casting method or a directly dry method, and the like.

In addition, preparation and film molding of the TPSNB resin composition may be performed in a sequential process, or the TPSNB resin composition may be processed in pellet form once and then a film is molded using this pellet.

In the method of producing a TPSNB resin film of the present invention, a distance between a die outlet and a contact point of a chill roll, namely, an air gap, is preferably 100 mm or less. When the air gap is less than 100 mm or less, it is less affected externally during a process and a film having a uniform thickness and uniform optical performance can be obtained.

And, in the method of producing a TPSNB resin film of the present invention, temperature, immediately prior to contact with the chill roll, of the TPSNB resin composition extruded from a die is preferably a glass transition temperature of the TPSNB resin plus 50°C or more. By setting it at the glass transition temperature of the TPSNB resin plus 50°C or more, a stress generated in molding the TPSNB resin film from the TPSNB resin composition is significantly reduced and therefore the occurrence of residual retardation can be suppressed. The reason for this is that in the case of amorphous thermoplastic resin such as TPSNB resin, the higher temperature of resin becomes, the less a stress is generated in being deformed. It is more preferably a glass transition temperature plus 80°C or more.

Also, it is preferred to keep variations in temperature of the TPSNB resin composition immediately prior to contact with the chill roll lower than 10°C. Even when the temperature of the TPSNB resin composition is adjusted to the glass transition temperature plus 50°C or more as described, in the case of varying in temperature, variations in stresses resulting from deformation of the resin develop, and therefore some resins may vary in residual retardation and displacement of the optical axis may also be generated due to the stress concentration on a part.

Further, in the method of producing the TPSNB resin film of the present invention, temperature of the TPSNB resin composition immediately after having been extruded from a die is preferably a glass transition temperature of the TPSNB resin plus 100°C or more. When it is lower than the glass transition temperature plus 100°C, a stress generated in molding it may become significantly large and therefore the residual retardation becomes apt to occur.

Thus, a method of controlling the temperature of the TPSNB resin composition extruded from a die is not particularly limited and includes, for example, a method of controlling a temperature of a die or polymer piping (adapter) by using, for example, a temperature controller with PID control function. In this case, a temperature of a die or polymer piping(adapter) is a temperature of a level of not thermally degrading resin. And, an approach, which keeps a temperature of the film by heating with a heater or using an thermal insulation cover at the air gap, is also conceivable. This approach can control temperature with high accuracy compared with a method of changing a temperature of a die and decreases variations in temperature, and therefore it is particularly effective for the case required to control temperature with high accuracy. And, since it is not necessary to increase a temperature of a die excessively, there is a merit of inhibiting degradation in resin.

Further, it is preferred to press the TPSNB resin composition against the chill roll at the downstream of a contact point in contacting the TPSNB resin composition melted and extruded with the chill roll. Thereby, the change in temperature of the TPSNB resin composition becomes uniform, and therefore displacement of the optical axis can be prevented and a film, which has a stable profile of thickness and a uniform thickness, is obtained.

A method of pressing the TPSNB resin composition against the chill roll is not particularly limited and includes, for example, a method such as an air knife, an air chamber, electrostatic pinning, a touch roll. Here, it is more preferable that temperature and pressure in the direction of width are uniform.

Preferably, the chill roll has the surface roughness Ry of 0.5 µm or smaller. When the surface roughness is larger than 0.5 µm, smoothness of the TPSNB resin film cannot be maintained and transparency of the TPSNB resin film may be poor. It is more preferably 0.3 µm or smaller. Incidentally, the surface roughness Ry can be measured by a method according to JIS B 0601. And, material of the chill roll is not particularly limited and includes, for example, carbon steel, stainless steel.

In the method of producing the TPSNB resin film of the present invention, it is preferred that a clearance of a die outlet attached to an extruder used is set in advance corresponding to design of a flow path of a die. An error of the same level as the variations in the film thickness is acceptable. Further, when the die is equipped with a plurality of clearance adjustment bolts, it may be adjusted corresponding to the thickness in extruding the film actually.

Since the TPSNB resin film of the first aspect in the present invention realizes the compatibility between excellent optical characteristics and physical properties as described, it can be suitably used as an optical film.

An optical film comprising the TPSNB resin film of the first aspect in the present invention also constitutes the present invention.

The TPSNB resin film of the first aspect in the present invention can also be suitably used as a protective film for a polarizer. A protective film for a polarizer comprising the TPSNB resin film of the first aspect in the present invention also constitutes the present invention.

The protective film for a polarizer of the present invention may be variously surface treated with reference to applications of a liquid crystal display to be used. The surface treatment is not particularly limited and includes, for example, clear hard coat treatment, AG (anti-glare) treatment, and AR (anti-reflection) treatment.

For the purpose of enhancing a bonding property to a polarizer, corona discharge treatment and the like may be applied to the protective film for a polarizer of the present invention in such a way a contact angle of water on the surface is about 40 to 50° within the limits of not impairing optical characteristics.

The TPSNB resin film of the first aspect in the present invention can also be suitably used as a retardation film which compensates a strain of light in passing through a liquid crystal material by uniaxially or biaxially drawing to impart orientation. A retardation film comprising the TPSNB resin film of the first aspect in the present invention also constitutes the present invention. Further, a polarizing plate, which is obtainable by laminating the retardation film of the present invention directly on at least one side of the polarizer, also constitutes the present invention.

A temperature in performing the drawing is not particularly limited but it is preferably within a range of from the glass transition temperature of the TPSNB resin to the glass transition temperature of the TPSNB resin plus 20°C. When it is out of this range, the resin film may break on a lower temperature side and desired retardation value may not be attained on an upper temperature side. It is more preferably within a range of from the glass transition temperature of the TPSNB resin plus 1°C to the glass transition temperature of the TPSNB resin plus 10°C.

A draw ratio in performing the drawing is not particularly limited but it is preferably 1.05 to 5.0 in the case of drawing in a direction of melt extrusion of a film. When the ratio is less than 1.05, sufficient retardation may not be attained because of too small magnitude of deformation, and when it is more than 5.0, a film may break. It is more preferably 1.1 to 2.5. Also, in the case of drawing in a direction perpendicular to the direction of melt extrusion of a film, it is preferably 1.2 to 3.0 and more preferably 1.5 to 2.5.

The second aspect in the present invention pertains to a polarizing plate which comprises a protective film for a polarizer, comprising a norbornene resin composition, and a polarizer, parallel transmittance being 40% or more, and the polarizing plate not breaking in peeling off it with a tensile speed of 300 mm/min and tension of from 2.5 to 3 N/25 mm under the conditions of a 180 degree peel test according to JIS Z 1528.

The polarizer is not particularly limited and a conventional one publicly known can be used, and for example, a substance obtainable by allowing a polyvinyl alcohol resin oriented by drawing to adsorb iodine or dye with dichroism can be used.

The polarizing plate of the second aspect in the present invention does not break in peeling off it with a tensile speed of 300 mm/min and tension of from 2.5 to 3 N/25 mm under the conditions of a 180 degree peel test according to JIS Z 1528.

Generally, a polarizing plate is required to be bonded to a liquid crystal cell at a strength of the order that the polarizing plate is not peeled off from the liquid crystal cell due to a stress generated by the thermal shrinkage of the polarizer comprising polyvinyl alcohol and the like and the dimensional change of the whole polarizing plate is suppressed. The adhesion force required for this is considered to be at least about 2.5 to 3 N/25 mm as peel strength in measuring at a tensile speed of 300 mm/min in a 180 degree peel test according to JIS Z 1528. Therefore, the polarizing plate of the second aspect in the present invention, having a characteristic of not breaking in peeling off it with a tensile speed of 300 mm/min and a tension of from 2.5 to 3 N/25 mm under the conditions of a 180 degree peel test of JIS Z 1528, has the excellent reworkability.

In the polarizing plate of the second aspect in the present invention, parallel transmittance is 40% or more. When it is less than 40%, there occurs a defective condition that the image displayed becomes insufficient in brightness and hard to view when it is used as a polarizing plate for a liquid crystal.

In the polarizing plate of the second aspect in the present invention, it is preferred that the rate of change in dimensions measured before and after heating at 90°C for 24 hours is 2% or less. When it is more than 2%, it becomes necessary to bond them at high strength larger than 3N/25 mm in order to prevent the polarizing plate from peeling off from the liquid crystal cell due to a stress generated in the change of the dimension, and therefore the reworkability may be poor.

A method of fabricating the polarizing plate of the second aspect in the present invention is not particularly limited and includes, for example, a method of bonding, the polarizer and the protective film for a polarizer of the present invention comprising the TPSNB resin film of the first aspect in the present invention using a publicly known (pressure sensitive) adhesive such as polyurethane, polyester or polyacrylic adhesive; and acrylic, siliconic or rubber pressure sensitive adhesive. In addition, on the occasion of bonding, heat bonding may be used in a mild condition of the extent that a polarizing function of a polarizer is not deteriorated.

The polarizing plate of the second aspect in the present invention exhibits extremely excellent optical characteristics and further also has the extremely excellent reworkability.

### BEST MODES FOR CARRYING OUT THE INVENTION

Hereinafter, the present invention will be described in more detail by way of examples, but the present invention is not limited to these examples.

### (Example 1)

### (1) Preparation of TPSNB resin film

TPSNB resin (ARTON G6810 produced by JSR Corporation: glass transition temperature 164°C, refractive index 1.52) and styrenic elastomer (Tuftec H1041 produced by ASAHI KASEI CORPORATION: refractive index 1.51, content of styrene 32%, content of ethylene 43%) were supplied to a biaxial melt extruder in proportions by weight of 90:10, and melted and mixed at 286°C, and the mixture was pelletized and pre-dried at 110°C for 3 hours and a TPSNB resin composition was prepared.

The resulting TPSNB resin composition was used and extruded and molded under the temperature conditions shown in Table 1 through the following extruder, T die and resin filter and an optical film having an average thickness of 40 µm was obtained.
extruder: uniaxial extruder with a T die of 90 mm in diameter and L/D = 28
T die: coat hanger type of 1,500 mm in width, the surface of a resin flow path is plated with H-Cr.
resin filter: leaf disk type filter (manufactured by Nippon Seisen Co., Ltd., filtering accuracy 10 µm)

And, as a contact point stabilizer, there was used an elastic touch roll equipped with a metal sleeve on its surface. Then temperature of the elastic touch roll and a chill roll was set at 70°C. Further, the surface roughness of the elastic touch roll and the chill roll was 0.2 µm in Ry. In addition, temperature of the resin composition immediately prior to contact with the chill roll was measured with a non-contact thermometer with the elastic touch roll being separated from the chill roll.

Further, after keeping the used TPSNB resin at 286°C purged by 99.9% with nitrogen, its glass transition temperature was measured with a DSC (DSC 6200R manufactured by Seiko Instruments Inc.) while flowing a nitrogen gas at a rate of 60 mL/min and the time that elapsed before the glass transition temperature increases by 1°C was determined and it was 120 hours.

### (2) Preparation of polarizing plate

A not-yet-drawn film (thickness: 75 µm) of polyvinyl alcohol (degree of polymerization: 3,800, degree of saponification: 99.5 mol%) was cleaned with water of room temperature and then drawn by six times in the longitudinal direction, and it was immersed into an aqueous solution containing iodine in an amount 0.5% by weight and potassium iodide in an amount 5% by weight while retaining this drawn condition and then, furthermore, crosslinked for 5 minutes in an aqueous solution of 50°C containing boric acid in an amount 10% by weight and potassium iodide in an amount 10% by weight and a polarizer was prepared.

The obtained TPSNB resin film was used as a protective film for a polarizing plate.

First, corona discharge treatment was applied to the side, which will be laminated with a polarizer, of the surface of the film. A contact angle of water on the surface of the protective film for a polarizing plate treated with corona discharge was 42 to 44°. Next, a mixture of A agent/B agent = 10/3(by weight) of a two component type waterborne urethane adhesive (EL-436 A/B produced by TOYO-MORTON, LTD.) was diluted with water in such a way that solid matter is 10% by weight to prepare an adhesive solution, and it was applied to the side, treated through corona discharge, of the protective film for a polarizing plate with a mayer bar No. 8, and this was bonded to both sides of a polarizer and a laminate was obtained.

The resulting laminate was retained for 72 hours in a thermostat of 45°C, and dried and cured and a polarizing plate was fabricated.

### (Example 2)

TPSNB resin (ARTON G6810 produced by JSR Corporation) used in Example 1 and styrenic elastomer (G1652 produced by KRATON Polymers Group of Companies: refractive index 1.52, content of styrene 28%, content of ethylene 45%) were supplied to a biaxial melt extruder in proportions by weight of 85:15, and melted and mixed at 286°C, and the mixture was sent to a T die heated at 286°C in a residence time of 30 minutes. A TPSNB resin film having a thickness of 30 µm was obtained by the same procedure as in Example 1 except for the conditions shown in Table 1. A polarizing plate was prepared by the same procedure as in Example 1 using the obtained TPSNB resin film as a protective film for a polarizing plate.

### (Example 3)

TPSNB resin (ARTON G6810 produced by JSR Corporation) used in Example 1 and styrenic elastomer (Tuftec 1041 produced by ASAHI KASEI CORPORATION), were supplied to a biaxial melt extruder in proportions by weight of 90:10, and melted and mixed at 293°C, and the mixture was sent to a T die heated at 293°C in a residence time of 30 minutes. A TPSNB resin film having a thickness of 30 µm was obtained by the same procedure as in Example 1 except for the conditions shown in Table 1. A polarizing plate was prepared by the same procedure as in Example 1 using the obtained TPSNB resin film as a protective film for a polarizing plate.

Further, after keeping the used TPSNB resin at 293°C purged by 99.9% with nitrogen, its glass transition temperature was measured with a DSC (DSC 6200R manufactured by Seiko Instruments Inc.) while flowing a nitrogen gas at a rate of 60 mL/min and the time that elapsed before the glass transition temperature increases by 1°C was determined and it was 40 hours.

### (Example 4)

TPSNB resin (ARTON G6810 produced by JSR Corporation) used in Example 1, styrenic elastomer (KRATON RP6936 produced by KRATON Polymers Group of Companies: refractive index 1.51, content of styrene 40%) and thermoplastic resin (Escorez 235E produced by Tonex Corporation) were supplied to a biaxial melt extruder in proportions by weight of 80.5:15:4.5, and melted and mixed at 286°C, and the mixture was pelletized and pre-dried at 110°C for 3 hours and a TPSNB resin composition was obtained.

The resulting TPSNB resin composition was used and a TPSNB resin film having a thickness of 40 µm was obtained by the same procedure as in Example 1 except for the conditions shown in Table 1. A polarizing plate was prepared by the same procedure as in Example 1 using the obtained TPSNB resin film as a protective film for a polarizing plate.

### (Example 5)

TPSNB resin (ARTON G6810 produced by JSR Corporation) used in Example 1 and styrenic elastomer (KRATON RP6936 produced by KRATON Polymers Group of Companies) were supplied to a biaxial melt extruder in proportions by weight of 85:15, and melted and mixed at 286°C, and the mixture was pelletized and pre-dried at 110°C for 3 hours and a TPSNB resin composition was obtained.

The resulting TPSNB resin composition was used and a TPSNB resin film having a thickness of 40 µm was obtained by the same procedure as in Example 1 except for the conditions shown in Table 1. A polarizing plate was prepared by the same procedure as in Example 1 using the obtained TPSNB resin film as a protective film for a polarizing plate.

### (Example 6)

TPSNB resin (ARTON G6810 produced by JSR Corporation) used in Example 1, styrenic elastomer (KRATON RP6936 produced by KRATON Polymers Group of Companies: refractive index 1.51, content of styrene 40%) and thermoplastic resin (Escorez 235E produced by Tonex Corporation) were supplied to a biaxial melt extruder in proportions by weight of 89:10:1, and melted and mixed at 286°C, and the mixture was pelletized and pre-dried at 110°C for 3 hours and a TPSNB resin composition was obtained.

The resulting TPSNB resin composition was used and a TPSNB resin film having a thickness of 40 µm was obtained by the same procedure as in Example 1 except for the conditions shown in Table 1. A polarizing plate was prepared by the same procedure as in Example 1 using the obtained TPSNB resin film as a protective film for a polarizing plate.

### (Comparative Example 1)

Only TPSNB resin (ARTON G6810 produced by JSR Corporation) used in Example was supplied to a uniaxial melt extruder and a TPSNB resin film having a thickness of 30 µm was obtained by the same procedure as in Example 1 except for the conditions shown in Table 1. A polarizing plate was prepared by the same procedure as in Example 1 using the obtained TPSNB resin film as a protective film for a polarizing plate.

### (Comparative Example 2)

A TPSNB resin film and a polarizing plate were prepared by the same procedure as in Example 5 except for changing the residence time in the extruder to 50 minutes.

### (Comparative Example 3)

A TPSNB resin film and a polarizing plate were prepared by the same procedure as in Example 5 except for changing the extrusion temperature to 310°C.

Further, after keeping the used TPSNB resin at 310°C purged by 99.9% with nitrogen, the glass transition temperature was measured with a DSC (DSC 6200R manufactured by Seiko Instruments Inc.) while flowing a nitrogen gas at a rate of 60 mL/min and the time that elapsed before the glass transition temperature increases by 1°C was determined and it was 12 hours.

### (Comparative Example 4)

TPSNB resin (ARTON G6810 produced by JSR Corporation) used in Example 1 and styrenic elastomer (G1652 produced by KRATON Polymers Group of Companies) were dissolved into toluene in proportions by weight of 90:10 to prepare a solution, and a TPSNB resin film having a thickness of 40 µm was obtained by a casting method using this solution.

The obtained TPSNB resin film became a heterogeneous and opaque film due to the occurrence of phase separation between the TPSNB resin and the styrenic elastomer.

A polarizing plate was prepared by the same procedure as in Example 1 using the obtained TPSNB resin film as a protective film for a polarizing plate.

With respect to the TPSNB resin films prepared in Examples 1 to 6 and Comparative Examples 1 to 4, a tensile elastic modulus, a tensile elongation at break, total transmittance, parallel transmittance, haze value, residual retardation, displacement of the optical axis, a photoelastic coefficient, variations in a film thickness, occurrence of fish eye and a rewinding property were measured according to the following method. In addition, the TPSNB resin film prepared in Example 1 was observed to evaluate the presence or absence of a salami structure using a transmission electron microscope according to the following method.

Further, with respect to the polarizing plates prepared in Examples 1 to 6 and Comparative Examples 1 to 4, parallel transmittance was measured and a breaking property in peeling and endurance were evaluated according to the following method.

The results are shown in Tables 2 and 3 and Fig. 3.

### (1) Measurement of tensile elastic modulus and tensile elongation at break of TPSNB resin film

Measurement was conducted under the following conditions using TENSILON (manufactured by ORIENTEC Co., Ltd.) according to JIS K 7113.

| | |
|---|---|
| distance between chucks | 150 mm |
| film width | 20 mm |
| tensile speed | 20 mm/min |

### (2) Measurement of total transmittance, parallel transmittance and haze value of TPSNB resin film

Measurement was conducted using a haze meter (TC-H III DKP manufactured by Tokyo Denshoku CO., LTD.) according to JIS K 7105.

### (3) Measurement of residual retardation and displacement of the optical axis of TPSNB resin film

Measurement was conducted at a measurement wavelength of 590 nm using an automatic birefringence analyzer (KOBRA-21ADH manufactured by Oji Scientific Instruments)

### (4) Measurement of photoelastic coefficient of TPSNB resin film

Each film was cut off in a size of 10 mm in width and 100 mm in length, and loads of 0, 500, 1,000 and 1,500 g in a direction of a long side were imposed on each film. Under this condition, the retardation was measured at a measurement wavelength of 550 nm using KOBRA-21ADH manufactured by Oji Scientific Instruments. A photoelastic coefficient was determined from the slope of an approximate straight line obtained by plotting the retardation with respect to load.

### (5) Measurement of variations in thickness of TPSNB resin film

A film thickness was measured by a method according to JIS K 7130, and the difference between the maximum value and the minimum value was determined. Model Millitron 1240 manufactured by Seiko EM was used for measurement.

### (6) Evaluation of occurrence of fish eye

Number of fish eyes of 100 µm square or larger in the obtained film was visually observed, and the time, which elapses from the start of production up to the moment when the number of generated fish eyes exceeds 10/m²; was measured.

### (7) Evaluation of rewinding property of TPSNB resin film

Each film was subjected to a rewinding test under the conditions of a line speed of 5, 10 and 30 m/min, rewinding tension of 500 N/650 mm and a FRP rewinding core of 6 inch, and the presence or absence of film-break was evaluated.

### (8) Observation of TPSNB resin film with transmission electron microscope

After the TPSNB resin film was dyed with ruthenium tetraoxide, the film was sliced in a thickness of about 0.05 µm in a machine direction (MD) and in a transverse direction (TD) in extrusion molding with a microtome, and each cross section was observed using a transmission electron microscope (JEM-1200EX II manufactured by JEOL LTD.) and photograph was taken. In addition, the presence or absence of a salami structure was evaluated based on this photograph.

### (9) Measurement of parallel transmittance of polarizing plate

Measurement was conducted using a haze meter (TC-H III DKP manufactured by Tokyo Denshoku CO., LTD.) according to JIS K 7105.

### (10) Evaluation of breaking property in peeling polarizing plate

### <Preparation of pressure sensitive adhesive and non-support tape>

94.8 parts by weight of butyl acrylate, 5 parts by weight of acrylic acid, and 0.2 parts by weight of 2-hydroxyethyl methacrylate were copolymerized in a solvent of ethyl acetate in the presence of 0.3 parts by weight of benzoyl peroxide and an ethyl acetate solution of acrylic polymer having a weight average molecular weight (Mw) of 1,200,000 and molecular weight distribution of 3.9 was obtained.

Toluene was added to the obtained ethyl acetate solution of acrylic polymer and the solution was diluted, and 13% by weight toluene solution of acrylic polymer was prepared. And, 2 parts by weight of an isocyanate crosslinking agent (CORONATE L produced by NIPPON POLYURETHANE INDUSTRY CO., LTD.) was added and the mixture was stirred and a pressure sensitive adhesive was prepared.

The obtained pressure sensitive adhesive was applied onto a release film and dried in two stages of 60°C for 5 minutes and 120°C for 5 minutes so as not to foam, and then a release film of an easy release type was further laminated on and temporarily attached to the surface of the pressure sensitive adhesive and a non-support tape having a thickness (average value) after dried of 25 µm was fabricated.

### <Fabrication of test piece>

The release film on the easy release side of the non-support tape was peeled off and it was laminated on the one side of a polarizing plate and a pressure sensitive adhesive sheet of polarizing plate was fabricated. The obtained pressure sensitive adhesive sheet of polarizing plate was cut off in the form of a rectangle of 25 mm × 150 mm in such a way that an angle of a polarizer absorption axis is 0 degrees and 90 degrees relative to a long side. Next, the release film on the non-support tape was peeled off and it was bonded to nonalkaline glass of 1.1 mm in thickness with a 2 kg roller. Further, this was autoclaved in the conditions of 50°C and 5 atoms and a test piece was prepared.

### <Peeling test>

With respect to each of the obtained test piece in which an angle of a polarizer absorption axis is 0 degrees relative to a long side and test piece in which an angle of a polarizer absorption axis is 90 degrees relative to a long side, a state of the polarizing plate in peeling off it with a tensile speed of 300 mm/min under the conditions of a 180 degree peel test according to JIS Z 1528 using TENSILON (manufactured by ORIENTEC Co., Ltd.) was visually observed and evaluated according the following criteria. Incidentally, the peeling force in the test was about 3 N/25 mm.
○: it was peeled off from the glass plate completely without breaking.
×: it broke during peeling and part of it was remained on the glass plate.

### (11) Evaluation of endurance of polarizing plate

### <Preparation of pressure sensitive adhesive and non-support tape>

A pressure sensitive adhesive and a non-support tape were prepared by the same procedure as in the case of the evaluation of breaking property in peeling a polarizing plate.

### <Fabrication of test piece>

The release film on the easy release side of the non-support tape was peeled off and it was laminated on the one side of the obtained polarizing plate, a pressure sensitive adhesive sheet of polarizing plate was fabricated. The obtained pressure sensitive adhesive sheet of polarizing plate was cut off in a size of 200 mm × 300 mm with an angle of a polarizer absorption axis being 0 degrees relative to a long side. Next, the release film on the non-support tape was peeled off and it was bonded to nonalkaline glass of 1.1 mm in thickness at a pressure of 19.6 N/25 mm using a roller.

The polarizing plate bonded to the glass was stored for 3 days in an oven of 100°C and further left standing for 1 week under the conditions of 25°C in temperature and 50% RH in humidity in a thermo-hygrostat, and then the surface of the polarizing plate was visually observed and evaluated according to the following criteria.
○: there is no crack or contaminant and transparency is excellent
Δ: there are cracks and the polarizing plate is slightly whitish
×: transparency is excellent but there are cracks
××: there are significant cracks and the polarizing plate is whitish

| | Condition of extrusion | | | | |
|---|---|---|---|---|---|
| | Extrusion temperature (°C) | Residence time (min) | Resin temperature immediately after extruding (°C) | Air gap (mm) | Resin temperature immediately prior to contacting with chill roll (°C) |
| Example1 | 286 | 30 | 286 | 90 | 215 |
| Example2 | 286 | 30 | 286 | 90 | 215 |
| Example3 | 293 | 30 | 293 | 90 | 215 |
| Example4 | 286 | 30 | 286 | 70 | 230 |
| Example5 | 286 | 30 | 286 | 70 | 230 |
| Example6 | 286 | 30 | 286 | 50 | 260 |
| Comparative Example1 | 310 | 50 | 310 | 90 | 235 |
| Comparative Example2 | 286 | 50 | 286 | 70 | 230 |
| Comparative Example3 | 310 | 30 | 310 | 70 | 240 |
| Comparative Example4 | - | - | - | - | - |

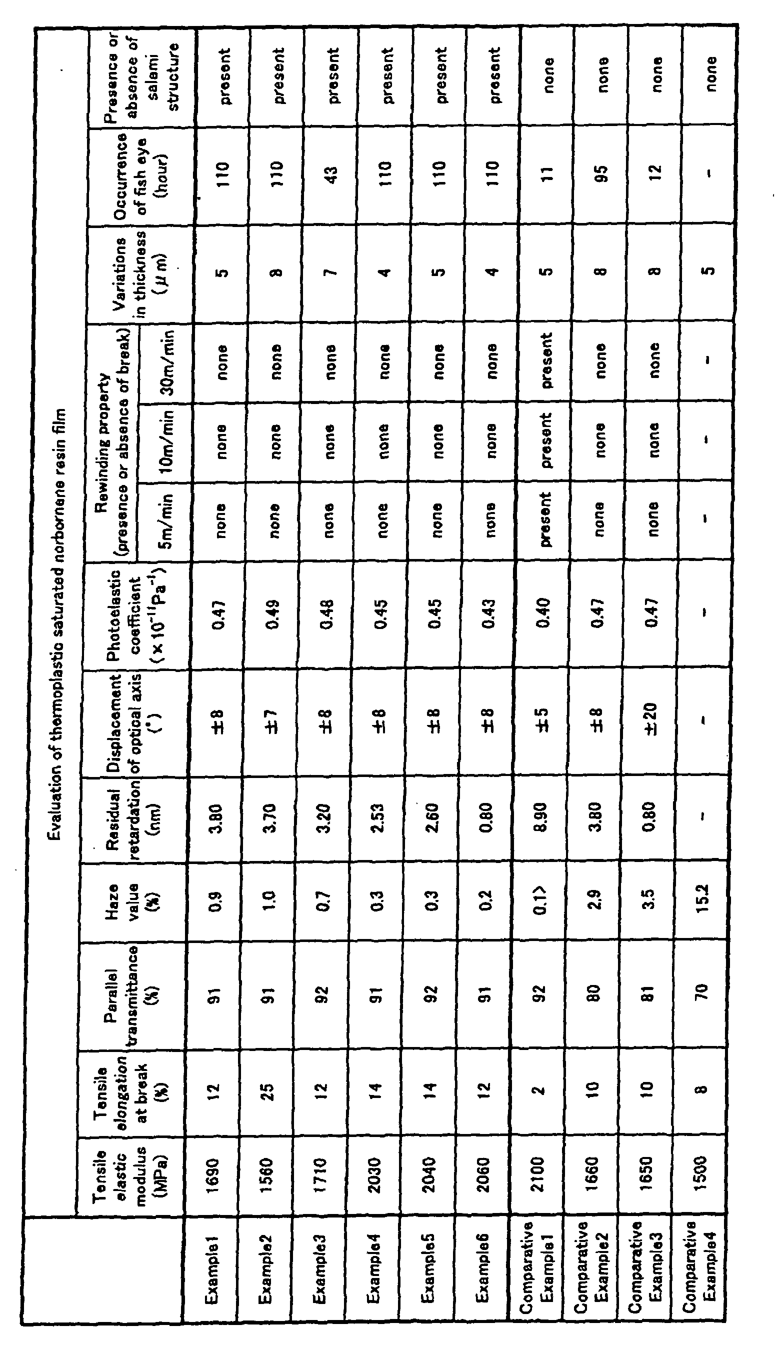

| | Evaluation of polarizing sheet | | | |
|---|---|---|---|---|
| | Parallel transmittance (%) | Endurance Endurance test | Breaking property in peeling | |
| | | | Test piece of 0 degrees | Test piece of 90 degrees |
| Example1 | 42 | ○ | ○ | ○ |
| Example2 | 41 | ○ | ○ | ○ |
| Example3 | 42 | ○ | ○ | ○ |
| Example4 | 42 | ○ | ○ | ○ |
| Example5 | 42 | ○ | ○ | ○ |
| Example6 | 42 | ○ | ○ | ○ |
| Comparative Example1 | 42 | × | × | × |
| Comparative Example2 | 38 | Δ | ○ | ○ |
| Comparative Example3 | 38 | Δ | ○ | ○ |
| Comparative Example4 | 35 | × × | × | × |

### (Example 9)

Using the TPSNB resin film prepared in Example 1, a retardation film was fabricated. Nip rollers were equipped on both sides of outside of a heating furnace divided into three zones, that is, preheating zone, drawing zone and cooling zone, in the longitudinal direction, and it was continuously wound off at a constant speed of 5.0 m/min from the inlet nip roller, while being drawn at a speed of 7.5 m/min at the outlet nip roller in such a way that a draw ratio is 150%. Temperature setting was 153°C at the preheating zone, 166°C at the drawing zone and 120°C at the cooling zone and a uniaxial retardation film was obtained.

With respect to the obtained retardation film, retardation in inputting light with a wavelength of 589 nm was measured using an automatic birefringence analyzer (KOBRA-21ADH manufactured by Oji Scientific Instruments) and it was 160 nm.

### INDUSTRIAL APPLICABILITY

In accordance with the present invention, it is possible to provide the thermoplastic saturated norbornene resin film, the optical film, the protective film for a polarizer, the retardation film, the polarizing plate and the method of producing the thermoplastic saturated norbornene resin film, which realize the compatibility between excellent physical properties and optical characteristics.

## Claims

1. A thermoplastic saturated norbornene resin film,
which is obtainable by using a thermoplastic saturated norbornene resin composition containing a thermoplastic saturated norbornene resin in an amount of 100 parts by weight and a rubber polymer in an amount of 5 to 40 parts by weight, parallel transmittance being 87% or more.

2. The thermoplastic saturated norbornene resin film according to claim 1,
wherein the difference of refractive indexes between the thermoplastic saturated norbornene resin and the rubber polymer is 0.2 or less.

3. The thermoplastic saturated norbornene resin film according to claim 1 or 2,
which has a tensile elastic modulus of 900 MPa or higher and a tensile elongation at break of 4 to 40%.

4. The thermoplastic saturated norbornene resin film according to claim 1, 2 or 3,
wherein residual retardation is 3 nm or lower and displacement of an optical axis is ±10° or smaller with respect to a machine direction.

5. The thermoplastic saturated norbornene resin film according to claim 1, 2 or 3,
wherein residual retardation is 1 nm or lower.

6. The thermoplastic saturated norbornene resin film according to claim 1, 2, 3, 4 or 5,
wherein the difference between the maximum thickness and the minimum thickness in measuring a thickness by a method according to JIS K 7130 is 5 µm or smaller.

7. The thermoplastic saturated norbornene resin film according to claim 1, 2, 3, 4, 5 or 6,
which may be rewinded without breaking with tension of 500 N/650 mm.

8. The thermoplastic saturated norbornene resin film according to claim 1, 2, 3, 4, 5, 6 or 7,
wherein the rubber polymer is a styrenic elastomer.

9. The thermoplastic saturated norbornene resin film according to claim 8,
wherein the styrenic elastomer is a styrene-ethylenebutylene copolymer, the content of a styrene component being 25 to 50% by weight and the content of an ethylene component being 25 to 50% by weight.

10. The thermoplastic saturated norbornene resin film according to claim 1, 2, 3, 4, 5, 6, 7, 8 or 9,
wherein the thermoplastic saturated norbornene resin composition further contains a thermoplastic resin having a number average molecular weight of 300 to 10,000.

11. The thermoplastic saturated norbornene resin film according to claim 1, 2, 3, 4, 5, 6, 7, 8, 9 or 10,
wherein a photoelastic coefficient is 2.0×10⁻¹¹ Pa⁻¹ or smaller.

12. An optical film,
which comprises the thermoplastic saturated norbornene resin film according to claim 1, 2, 3, 4, 5, 6, 7, 8, 9, 10 or 11.

13. A protective film for a polarizer,
which comprises the thermoplastic saturated norbornene resin film according to claim 1, 2, 3, 4, 5, 6, 7, 8, 9, 10 or 11.

14. A retardation film,
which comprises the thermoplastic saturated norbornene resin film according to claim 1, 2, 3, 4, 5, 6, 7, 8, 9, 10 or 11.

15. A polarizing plate,
which comprises a protective film for a polarizer, comprising a norbornene resin composition, and a polarizer, parallel transmittance being 40% or more, and the polarizing plate not breaking in peeling off the polarizing plate with a tensile speed of 300 mm/min and tension of 2.5 to 3 N/25 mm under the conditions of a 180 degree peel test according to JIS Z 1528.

16. The polarizing plate according to claim 15,
wherein a rate of change in dimensions measured before and after heating at 90°C for 24 hours is 2% or less.

17. A polarizing plate,
which is obtainable by laminating the retardation film according to claim 14 directly on at least one side of a polarizer.

18. A method of producing the thermoplastic saturated norbornene resin film according to claim 1, 2, 3, 4, 5, 6, 7, 8, 9, 10 or 11, by a melt extrusion process,
wherein a melting temperature of the thermoplastic saturated norbornene resin composition during melting the thermoplastic saturated norbornene resin composition and sending the thermoplastic saturated norbornene resin composition to a die is a glass transition temperature of the thermoplastic saturated norbornene resin plus 135°C or lower and an average residence time from melting the thermoplastic saturated norbornene resin composition to sending the thermoplastic saturated norbornene resin composition to a die is 40 minutes or less.

19. The method of producing a thermoplastic saturated norbornene resin film according to claim 18,
wherein temperature, immediately prior to contact with a chill roll, of the thermoplastic saturated norbornene resin composition extruded from a die is a glass transition temperature of the thermoplastic saturated norbornene resin plus 50°C or more.

20. The method of producing a thermoplastic saturated norbornene resin film according to claim 18,
wherein temperature, immediately prior to contact with a chill roll, of the thermoplastic saturated norbornene resin composition extruded from a die is a glass transition temperature of the thermoplastic saturated norbornene resin plus 80°C or more.
